# EUROPEAN PATENT SPECIFICATION

(11) **EP 4 337 603 B1**
(45) Date of publication and mention of the grant of the patent: **09.04.2025**
(21) Application number: 22726122.9
(22) Date of filing: 29.04.2022
(51) Int. Cl.: C01B 15/023, B01D 1/06, F01D 1/02, B01D 3/00

(54) **OPTIMIZED STEAM NETWORK FOR THE AO PROCESS**
OPTIMIERTES DAMPFNETZWERK FÜR DAS AO-VERFAHREN
RÉSEAU DE VAPEUR OPTIMISÉ POUR LE PROCÉDÉ AO

(30) Priority: 10.05.2021 EP 21172999
(43) Date of publication of application: 20.03.2024
(73) Proprietor: Evonik Operations GmbH, 45128 Essen (DE)
(72) Inventor: CHAPPELL, Brennan, 55130 Mainz (DE); ARÉVALO SAADE, Eduardo Federico, 63526 Erlensee (DE); LODE, Florian, 61137 Schöneck (DE)
(74) Representative: Evonik Patent Association
(86) International application number: PCT/EP2022/061473
(87) International publication number: WO 2022/238147

(56) References cited:
- WO-A2-2011/000831
- US-A- 3 714 342
- US-A- 5 302 367
- US-A1- 2013 146 438

## Description

### TECHNICAL FIELD

The present invention relates to a process and a facility for making hydrogen peroxide using the anthraquinone process, wherein at least one steam turbine drives at least one rotating equipment and provides a steam flow with a pressure range of -0.8 barg to 3 barg and a temperature range of 60 to 185 °C to an evaporator used in a distillation unit for concentrating an aqueous hydrogen peroxide extract.

### TECHNICAL BACKGROUND

The most used process for producing hydrogen peroxide on an industrial scale is the anthraquinone process (AO process), which generates hydrogen peroxide by hydrogenating a working solution of an alkylanthraquinone or an alkyltetrahydroanthraquinone in a water immiscible solvent and oxidizing the hydrogenated solution with molecular oxygen (O₂), usually with air. The hydrogen peroxide is then extracted with water from the working solution and the working solution is reused for generating hydrogen peroxide. An overview of the anthraquinone process is given in Ullmann's Encyclopedia of Industrial Chemistry, online edition, Vol. A18, pages 397-409, DOI 0.1002/14356007.a13_443.pub2, and in particular in Fig. 5 on page 401.

The concentration of the obtained aqueous hydrogen peroxide extract is usually achieved by a distillation unit. The distillation unit requires a huge amount of energy such as heat to vaporize the aqueous hydrogen peroxide extract. The heat is usually provided by steam produced by a steam generator. Moreover, feed pumps and compressors used in the anthraquinone process for the production of hydrogen peroxide additionally require a huge amount energy, particularly electrical energy that is environmentally unfriendly.

Accordingly, the object of the present invention is to provide a novel process and facility for producing hydrogen peroxide in an anthraquinone process that reduces CO₂ emission and consumes less energy.

The present invention provides a new and inventive process as well as facility for producing hydrogen peroxide in an anthraquinone process. At least one steam turbine is used to provide the required steam pressure for the evaporator in the distillation unit of an anthraquinone process. At the same time the at least one steam turbine drives at least one rotating equipment that is used in the anthraquinone process such as a compressor or feed pump. Accordingly, the novel process and facility reduces the total electrical input for the anthraquinone process and leads to less CO₂ emission. Additionally, by using at least one steam turbine at a broader operating range the low pressure with low temperature obtained by the at least one steam turbine leads to less decomposition of hydrogen peroxide.

### SUMMARY OF THE INVENTION

Particularly, the aforementioned objective can be achieved by a process for making hydrogen peroxide, preferably a circulating working fluid, particularly carried out in a facility as defined in the description, comprising the steps (a) hydrogenating a working solution, said working solution comprising an alkylanthraquinone, an alkyltetrahydroanthraquinone or both, contact said working solution with compressed hydrogen in a hydrogenator (110) to provide a hydrogenated working solution comprising an alkylanthrahydroquinone, an alkyltetrahydroanthrahydroquinone or both, (b) oxidizing said hydrogenated working solution obtained in step a) with a compressed oxygen containing gas, such as compressed air or compressed enriched oxygen containing air, in an oxidation reactor (111) to provide an oxidized working solution comprising hydrogen peroxide and an alkylanthraquinone, an alkyltetrahydroanthraquinone or both, (c) extracting hydrogen peroxide from oxidized working solution obtained in step b) to provide an aqueous hydrogen peroxide extract, and (d) concentrating the aqueous hydrogen peroxide extract obtained in step c) in at least one distillation unit (103) comprising an evaporator (113) and a distillation column (114), said distillation column (114) receiving vapor from said evaporator (113), to provide a concentrated aqueous hydrogen peroxide solution, characterized in that at least one steam turbine (120, 121, 122, 123) drives at least one rotating equipment (125, 126, 127, 128, 117a-d), at least one steam turbine (120, 121, 122, 123) providing a steam flow with a pressure range of - 0.8 barg to 3 barg and a temperature range of 60 to 185 °C to the evaporator (113).

The present invention also concerns a facility for producing hydrogen peroxide by an anthraquinone process, particularly by a process as defined in the description, comprising, a working fluid, preferably a circulating working fluid, comprising an alkylanthraquinone, an alkyltetrahydroanthraquinone or both, a hydrogenator (110) for hydrogenating the working solution, to provide a hydrogenated working solution, an oxidizer for oxidizing the hydrogenated working solution with an oxygen containing gas, said oxidizer comprising an oxidation reactor (111) and a gas compressor (127) for introducing compressed said oxygen containing gas into the oxidation reactor (111), to provide an oxidized working solution, an extractor (112) for extracting hydrogen peroxide from the oxidized working solution to provide an aqueous hydrogen peroxide extract, and a distillation unit (103) for concentrating the aqueous hydrogen peroxide extract to provide a concentrated hydrogen peroxide solution, said distillation unit (103) comprising a distillation column (114) and an evaporator (113), characterized in that the facility comprises at least one steam turbine (120, 121, 122, 123), wherein the steam turbine (120, 121, 122, 123) is subjectable with steam, at least one rotating equipment (125, 126, 127, 128, 117a-d) is drivable by at least one steam turbine (120, 121, 122, 123), a steam outlet of the steam turbine (120, 121, 122, 123) is connected with a conduit (141) to a steam inlet of the evaporator (113).

Specific or preferred variants of the process or facility of the present invention are set forth in the dependent claims and aspects. The present invention also concerns the use of at least one steam turbine that drives at least one rotating equipment in a process for producing hydrogen peroxide by an anthraquinone process, particularly by a process as defined in the description, wherein the at least one steam turbine provides a steam flow with a pressure range of -0.8 barg to 3 barg and a temperature range of 60 to 185 °C to an evaporator (113) for concentrating an aqueous hydrogen peroxide extract in at least one distillation unit (103) comprising the evaporator (113) to obtain concentrated aqueous hydrogen peroxide solution.

These and other optional features and advantages of the present invention are described in more detail in the following description, aspects and figures.

### BRIEF DESCRIPTION OF THE DRAWINGS

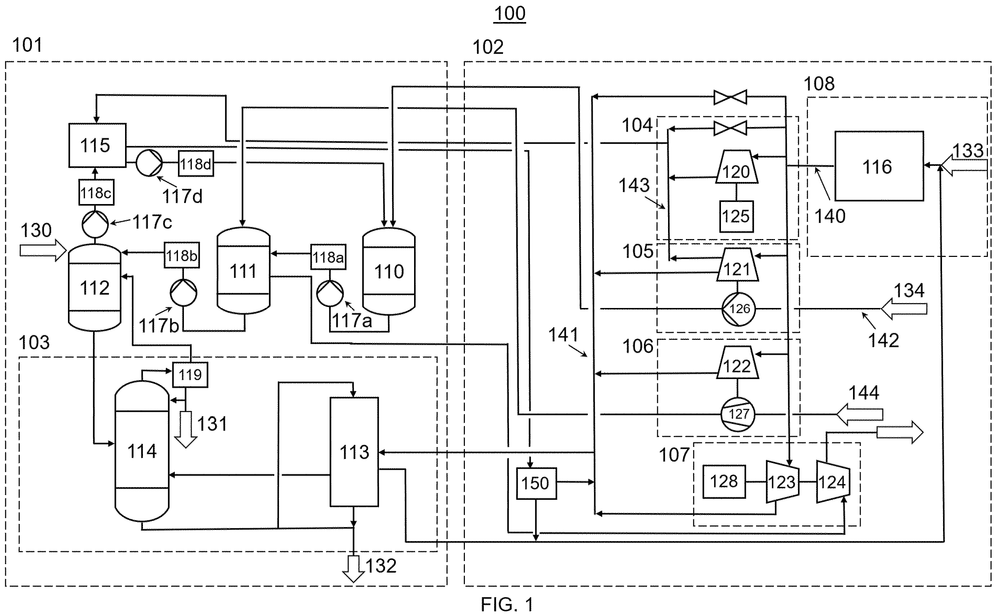

Figure 1 (FIG. 1) shows a process and facility for making hydrogen peroxide.

### DETAILED DESCRIPTION

The process for making hydrogen peroxide using an anthraquinone process comprises the step (a) hydrogenating a working solution, said working solution comprising an alkylanthraquinone, an alkyltetrahydroanthraquinone or both, contact said working solution with compressed hydrogen in a hydrogenator to provide a hydrogenated working solution comprising an alkylanthrahydroquinone, an alkyltetrahydroanthrahydroquinone or both.

In step a) of the process of the invention, a working solution containing an alkylanthraquinone, an alkyltetrahydroanthraquinone or both is hydrogenated with hydrogen in a hydrogenation reactor (or hydrogenator) to provide a hydrogenated working solution comprising an alkylanthrahydroquinone, an alkyltetrahydroanthrahydroquinone or both. The working solution preferably comprises one or more 2-alkylanthraquinones, 2-alkyltetrahydroanthraquinones or mixtures of both 2-alkylanthraquinones and 2-alkyltetrahydroanthraquinones, referred to as quinones in the following. The 2-alkylanthraquinone is preferably 2-ethylanthraquinone (EAQ), 2-amylanthraquinone (AAQ) or 2-(4-methylpentyl)-anthraquinone (IHAQ) and more preferably a mixture of EAQ with AAQ and/or IHAQ where the molar fraction of quinones carrying an ethyl group is from 0.05 to 0.95. The working solution preferably comprises both 2-alkylanthraquinones and the corresponding 2-alkyltetrahydroanthraquinones and the ratio of 2-alkyltetrahydroanthraquinones plus 2-alkyltetrahydroanthrahydroquinones to 2-alkylanthraquinones plus 2-alkylanthrahydroquinones is preferably maintained in the range of from 1 to 20 by adjusting the conditions of the hydrogenating step and of regenerating steps used in the anthraquinone process. The working solution can also comprise at least one solvent for dissolving the quinone(s) and the hydroquinone(s). The working solution preferably comprises a mixture of alkylbenzenes having 9 or 10 carbon atoms as solvent for anthraquinones and at least one polar solvent selected from diisobutylcarbinol (DiBC), methylcyclohexylacetate (MCA), trioctylphosphate (TOP), tetrabutylurea (TBU) and N-octylcaprolactam as solvent for anthrahydroquinones. DiBC, MCA, TOP and TBU are preferred and TOP is most preferred. It is preferred that the working solution is circulating through the facility or process. In other words, the working solution should be resupplied, preferably through a buffer tank and pumped by a working solution pump, to the hydrogenator after the extraction from the hydrogen peroxide.

In hydrogenation step a), all or a part of the quinones are converted to the corresponding hydroquinones. The hydrogenation is typically carried out in the presence of a heterogeneous hydrogenation catalyst. All hydrogenation catalysts known from the prior art for the anthraquinone cyclic process can be used as catalysts in the hydrogenation step. Noble metal catalysts containing palladium as the principal component are preferred. The catalysts can be used as a fixed bed catalyst or as a suspended catalyst and suspended catalysts can be either unsupported catalysts, such as palladium black, or supported catalysts, with suspended supported catalysts being preferred. SiO₂, TiO₂, Al₂O₃ and mixed oxides thereof, as well as zeolites, BaSO₄ or polysiloxanes, can be used as support materials for fixed-bed catalysts or supported suspended catalysts, with Al₂O₃ and sodium aluminum silicate being preferred. Catalysts in the form of monolithic or honeycombed moldings, the surface of which is coated with the noble metal, can also be used. Hydrogenation can be carried out in bubble column reactors, stirred-tank reactors, tube reactors, fixed-bed reactors, loop reactors or gas-lift reactors which can be equipped with devices for distributing hydrogen gas in the working solution, such as static mixers or injection nozzles. Preferably, a bubble column with a recycle and injection of hydrogen gas at the column bottom is used, such as described in WO 2010/139728 and in Ullmann's Encyclopedia of Industrial Chemistry, online edition, entry "Hydrogen Peroxide", DOI: 10.1002/14356007.a13_443.pub3, pages 13-14 and Fig. 8. Hydrogenation is preferably carried out at a temperature of from 20 to 100°C, more preferably 45 to 75°C, and a pressure of from 0.1 MPa to 1 MPa, more preferably 0.2 MPa to 0.5 MPa. The hydrogenation is preferably performed in such a way that most of the hydrogen introduced into the hydrogenation reactor, preferably more than 90 wt.-%, such as more than 95 wt.-%, 80 to 90 wt.-%, 80 to 95 wt.-%, based on the total weight of hydrogen, is consumed in a single pass through the reactor. The ratio between hydrogen and working solution fed to the hydrogenation reactor is preferably chosen to convert between 30 and 80 % of the quinones to the corresponding hydroquinones. If a mixture of 2-alkylanthraquinones and 2-alkyltetrahydroanthraquinones is used, the ratio between hydrogen and working solution is preferably chosen so that only the 2-alkyltetrahydroanthraquinones are converted to hydroquinones and the 2-alkylanthraquinones remain in the quinone form.

The hydrogenator of the facility of the present invention is configured for hydrogenating a working solution which contains an alkylanthraquinone, an alkyltetrahydroanthraquinone or both, with hydrogen, such as compressed hydrogen. The hydrogenator of the facility of the invention may be of any type known from the prior art for hydrogenating a working solution comprising an alkylanthraquinone, an alkyltetrahydroanthraquinone or both. The hydrogenator may comprise a bubble column reactor, a stirred-tank reactor, a tube reactor, a fixed-bed reactor, a loop reactor or a gas-lift reactor for carrying out the hydrogenation reaction, depending on whether a suspended hydrogenation catalyst or a fixed bed hydrogenation catalyst shall be used. The hydrogenator preferably comprises a bubble column with a recycle and injection of hydrogen gas at the column bottom for use with a suspended catalyst as known from WO 2010/139728 and Ullmann's Encyclopedia of Industrial Chemistry, online edition, entry "Hydrogen Peroxide", DOI: 10.1002/14356007.a13_443.pub3, pages 13-14 and Fig. 8. The hydrogenator preferably comprises a heat exchanger for removing the heat of reaction from the working solution, preferably a heat exchanger arranged inside the hydrogenation reactor. When a suspended hydrogenation catalyst shall be used, the hydrogenator typically also comprises a separator for separating catalyst from the working solution and returning it to the hydrogenation reactor, such as a filter, which may operate by cross-flow filtration or dead-end filtration. The hydrogenator may also comprise a hydrogen compressor for carrying out hydrogenation at a pressure higher than the pressure provided by the source of the hydrogen feed. The hydrogenator may further comprise a separator for separating non-reacted hydrogen gas from the hydrogenated working solution and recycling it to the hydrogenation reactor. If such a separator is present, the hydrogenator preferably also comprises a recycle compressor for recycling the non-reacted hydrogen gas.

In step b) of the process of the invention, hydrogenated working solution obtained in step a) is oxidized with an oxygen containing gas in an oxidation reactor to provide an oxidized working solution comprising hydrogen peroxide and an alkylanthraquinone, an alkyltetrahydroanthraquinone or both. The oxygen containing gas is preferably air or air enriched with oxygen. All oxidation reactors known from the prior art for the anthraquinone process can be used for the oxidation, bubble columns operated in counter-current being preferred. The bubble column can be free from internal devices, but preferably contains distribution devices in the form of packings or sieve plates, most preferably sieve plates in combination with internal coolers. Oxidation is preferably carried out at a temperature of from 30 to 70°C, more preferably from 40 to 60°C. Oxidation is preferably performed with an excess of oxygen to convert more than 90 %, preferably more than 95 %, of the hydroquinones to the quinone form.

The oxidation reactor of the facility of the present invention is configured for oxidizing hydrogenated working solution with an oxygen containing gas. The oxidation reactor comprises an oxidation reactor which may be of any type known from the prior art for oxidizing a hydrogenated working solution comprising an alkylanthrahydroquinone, an alkyltetrahydroanthrahydroquinone or both. Preferably, a bubble column, which is preferably operated in counter-current, is used as oxidation reactor. The bubble column can be free from internal devices, but preferably contains distribution devices in the form of packings or sieve plates, most preferably sieve plates in combination with internal heat exchangers. The oxidation reactor preferably comprises a demister for separating droplets entrained in the off-gas leaving the oxidation reactor.

In step c) of the process of the invention, hydrogen peroxide is extracted from oxidized working solution obtained in step b) to provide an aqueous solution of hydrogen peroxide extract. The oxidized working solution of step b), which contains dissolved hydrogen peroxide, is extracted with an aqueous extractant to provide an aqueous hydrogen peroxide solution and an extracted oxidized working solution (such as working solution) containing essentially no hydrogen peroxide. Deionized water, which may optionally contain additives for stabilizing hydrogen peroxide, for adjusting the pH and/or for corrosion protection, is preferably used for extracting the hydrogen peroxide. Preferably, phosphoric acid is added for adjusting the pH and for corrosion protection. Extraction is preferably carried out in a counter-current continuous extraction column, sieve-plate columns being most preferred. The aqueous hydrogen peroxide solution obtained by extraction may also be purified for removing working solution components, preferably by washing with a solvent, which is preferably a solvent comprised in the working solution.

The extracted oxidized working solution (i.e. working solution) is typically recycled to step a) for operating a cyclic anthraquinone process. Accordingly, the extraction in step (c) further comprises the provision of the working solution extracted in step (c) and the transfer of the working solution, comprising an alkylanthraquinone, an alkyltetrahydroanthraquinone or both, preferably via a buffer tank and a working solution pump, to the hydrogenator in which the working solution is hydrogenated in order to provide the hydrogenated working solution according to step (a). The extracted working solution of step c) is preferably dried in a dryer before it is recycled, preferably via a buffer tank and a working solution pump, to hydrogenating step a). Drying of the extracted working solution is preferably carried out by evaporating water from the working solution at a temperature of from 30 to 110 °C, preferably 40 to 75 °C and a pressure of from 10 to 300 mbar, preferably 20 to 100 mbar. Such drying of extracted working solution at reduced pressure is preferably carried out as described in WO 03/070632 on page 8, line 24 to page 8, line 3. The unit for producing hydrogen peroxide preferably further comprises a dryer for reducing the water content of the extracted working solution before recycling it to the hydrogenator. Any type of dryer known from the prior art to be suitable for removing water from the working solution of an anthraquinone process may be used. Preferably the dryer comprises a heater and the heater is subjected with medium pressure steam as described below.

The extraction column of the facility of the present invention is configured for extracting hydrogen peroxide from oxidized working solution. Any type of extraction column known from the prior art for extracting hydrogen peroxide with an aqueous extractant from oxidized working solution containing dissolved hydrogen peroxide may be used. The extraction column is preferably a counter-current continuous extraction column, sieve-plate columns being most preferred. The facility (or plant) of the present invention may additionally comprise a hydrogen peroxide purification unit for purifying the extracted aqueous hydrogen peroxide solution by removing working solution components, preferably a unit for washing the aqueous hydrogen peroxide solution with a solvent.

In step d) of the process of the invention, the aqueous hydrogen peroxide extract obtained in step c) is concentrated in at least one distillation unit comprising an evaporator and a distillation column, said distillation column receiving vapor from said evaporator, to provide a concentrated aqueous hydrogen peroxide solution.

The aqueous solution of hydrogen peroxide can be concentrated to a concentration of from 45 to 90 wt.-%, such as 50 to 80 wt.-%, 50 to 75 wt.-%, 65 to 70 wt.-%, or 60 to 75 wt.-%, of hydrogen peroxide, based on the total weight of the concentrated aqueous hydrogen peroxide solution. The hydrogen peroxide can be concentrated at reduced pressure, preferably at a pressure of from 6000 to 13000 Pa (complies to 60 to 130 mbar), to prevent formation of explosive hydrogen peroxide vapors in the distillation.

The distillation unit comprises an evaporator and a distillation column receiving vapor from the evaporator. Any type of evaporator and distillation column known from the prior art for concentrating an aqueous hydrogen peroxide solution may be used. The evaporator may be a distillation bottoms evaporator, which may be arranged separately from the distillation column or may be integrated into the distillation column, for example as disclosed in EP 0 419 406 A1, Fig. 4 or in EP 0 835 680 A1, Fig. 1 and 2. A separate thermosiphon evaporator passing a two-phase mixture of vapor and liquid to the distillation column may be used as distillation bottoms evaporator. The distillation unit may also comprise both a hydrogen peroxide feed evaporator and a distillation bottoms evaporator, with compressed vapor being passed to the hydrogen peroxide feed evaporator, for example as disclosed in Fig. 1 and 2 of WO 2012/025333, or to the distillation bottoms evaporator or to both the hydrogen peroxide feed evaporator and the distillation bottoms evaporator. The hydrogen peroxide feed evaporator subjected with the low-pressure steam, i.e. a steam flow with a pressure range of -0.8 barg to 3 barg and a temperature range of 60 to 185 °C, according to the invention. Additionally, a preheater can also be subjected with the low-pressure steam, i.e. a steam flow with a pressure range of -0.8 barg to 3 barg and a temperature range of 60 to 185 °C, according to the invention. The distillation column may comprise trays or packings or a combination of both and preferably comprises structured packings to minimize pressure drop in the column. The distillation unit may also comprise a vapor compressor receiving overhead vapor from the distillation column and passing compressed vapor as heating medium to the evaporator. The vapor compressor may be a mechanical compressor, preferably a one stage mechanical compressor and is most preferably a water ring pump. The vapor compressor may alternatively be a gas jet pump and is preferably a steam driven ejector. The vapor compressor can be driven by the at least one steam turbine. The evaporator can be a falling film evaporator, single-stage evaporator, preferably a single-stage circulation evaporator, rising film evaporator, rising/falling film evaporator, or reboiler. A falling film evaporator is particularly preferred since the heat transfer efficiency allows the use of steam at below atmospheric pressure, such as -0.6 barg or -0.8 to 0 barg. Accordingly, it is particularly preferred to use a falling film evaporator that is subjected with steam derived from at least one steam turbine, wherein the steam has a pressure range of -0.8 barg to 0 barg and a temperature range of 60 to 185 °C

The unit for producing hydrogen peroxide typically also comprises at least one buffer tank for storing aqueous hydrogen peroxide solution produced by the unit and at least one buffer tank for storing the circulating working solution.

The process as well as the facility further comprises at least one steam turbine, wherein the at least one steam turbine drives at least one rotating equipment. Particularly, the shaft-power of the turbines is used to drive the rotating equipment. Accordingly, the steam turbine is directly connected to rotating equipment via a drive shaft of the steam turbine and the rotating equipment. It is intended that most or all of the rotating equipment is operated by at least one steam turbine without an electrical drive. The rotating equipment can be any rotating equipment in the AO process, particularly as described in the description. For instance, the rotating equipment can be a compressor, a feed pump, such as oxidizer feed pump, or hydrogen feed pump, a working solution pump, a dryer, or a generator, such as an electric generator. The at least one steam turbine can be a backpressure steam turbine.

The at least one steam turbine provides a steam flow with a pressure range of -0.8 barg to 3 barg, preferably -0.8 to 2 barg, -0.7 to 1 barg, -0.6 to 1 barg, -0.5 to 0.5 barg, or -0.6 to 0 barg, and a temperature range of 60 to 185 °C, preferably 60 to 185 °C, 60 to 185 °C, 80 to 170 °C, or 100 to 150 °C, (low-pressure steam) to the evaporator of the distillation unit. Particularly, this steam is used to supply heat to the evaporator. Said steam flow with a pressure range of -0.8 barg to 3 barg and a temperature range of 60 to 185 °C can be regarded as low-pressure steam. The notation barg or bar(g) represents gauge pressure, i.e. pressure in bars above ambient or atmospheric pressure. Gauge pressure is zero-referenced against ambient air pressure. A negative sign represents a negative pressure and thus, below the ambient air pressure. Accordingly, -0.8 barg represents a vacuum that is below the ambient air pressure. Usually, the ambient air pressure is 1.013 bar (1 atm). A pressure of zero barg means that the pressure of the measured system equals the ambient air pressure.

The at least one steam turbine can be one or more one steam turbine that provides the aforementioned steam flow. It is preferred that more than one, such as 2, 3, 4, 5, or 6, steam turbines are present in the facility and used in the process. It is also possible that the at least one steam turbine supplies two different steam flows, such as a low and medium pressurized steam. A steam flow having a medium pressurized steam refers to steam with a pressure range of 1 to 5 barg and a temperature range of 100 to 250 °C. The medium pressure steam can be subjected to other steam consumers that require said medium pressure steam in the AO process such as a heater or dryer. Accordingly, the present invention can comprise at least one steam turbine that provides at least two steam flows, a first steam flow providing steam with a pressure range of -0.8 barg to 3 barg, preferably -0.8 to 2 barg, -0.7 to 1 barg, -0.6 to 1 barg, -0.5 to 0.5 barg, - 0.8 to lower than 0 barg, -0.8 to 0 barg, or -0.6 to 0 barg, and a temperature range of 60 to 185 °C, preferably 60 to 185 °C, 60 to 185 °C, 80 to 170 °C, or 100 to 150 °C, to the evaporator (low or vacuum pressure steam) and a second steam flow providing steam with a pressure range of 1 to 5 barg, such as 1 to 4 barg, or 1 to 2 barg, and a temperature range of 100 to 250 °C, such as 100 to 220 °C, 110 to 200 °C, to other AO medium pressure steam consumers such as a heater or dryer (medium pressure steam). The pressure of the second steam flow providing steam should be higher than the pressure of the first steam flow providing steam. Since the steam turbine provides two steam flows, the at least one steam turbine has one steam inlet and two steam outlets.

Moreover, it is desired that at least one steam turbine comprises a first steam turbine that provides a first steam flow comprising steam with a pressure range of -0.8 to 3 barg and a temperature range of 60 to 185 °C, wherein an outlet for the first steam flow is connected to the evaporator, and a second steam turbine that provides a second steam flow comprising steam with a pressure range of 1 to 5 barg and a temperature range of 100 to 250 °C to other AO steam consumers like a heater or dryer, wherein an outlet for the second steam flow is connected to a AO steam consumer such as a heater or dryer. It is desired that the pressure of the steam of the second steam flow is higher than the pressure of the steam of the first steam.

As mentioned above, the dryer can be supplied with medium pressure steam to remove remaining water from the working solution before being resupplied to the hydrogenator. The condensate derived from the steam flow and subjected to the dryer can be flashed in a chamber to produce a steam flow with a pressure range of -0.8 barg to 3 barg and a temperature range of 60 to 185 °C (low-pressure steam) that is supplied to the evaporator or to the conduit that is connected to the evaporator. Thus, a flash chamber that is subjected with condensate derived from medium pressure steam can produce low-pressure steam and thus, the energy consumption of the AO process is further reduced.

A steam flow with a pressure range of 10 to 120 barg and a temperature range of 185 to 500 °C (high-pressure steam) can drive at least one steam turbine, preferably all steam turbines. It is preferred that a superheated or saturated steam source provides a steam flow with a pressure range of 10 to 120 barg and a temperature range of 185 to 500 °C that drives at least one steam turbine, preferably all steam turbines. The superheated or saturated steam source can be a gas turbine heat recovery steam generator. The steam flow that is provided by the gas turbine heat recovery steam generator can drive an electrical generator. A steam inlet of at least one steam turbine can be connected with a conduit from a steam outlet of a gas turbine heat recovery steam generator.

The present invention can comprise a steam reforming unit for producing hydrogen from natural gas, such as methane, which comprises a steam reformer and a steam generator as a superheated or saturated steam source which is heated by product gas exiting the steam reformer. The steam reforming unit typically also comprises a reactor for converting carbon monoxide to carbon dioxide by a water gas shift reaction, and a hydrogen separation unit which separates hydrogen from carbon dioxide. A hydrogen outlet of the steam reforming unit is connected by a conduit with an inlet of the hydrogenator for producing hydrogen peroxide, and a steam outlet of the steam generator is connected by a conduit with an inlet of at least one steam turbine. This allows to use energy generated in the steam reformer for heating the steam generator and thereby reduces the energy consumption of the facility and process.

As mentioned above, the at least one steam turbine provides a steam flow with a pressure range of -0.8 barg to 3 barg and a temperature range of 60 to 185 °C (low-pressure steam) to the evaporator via a low-pressure steam conduit system. More than one turbine can be connected to the low-pressure steam conduit system that distributes the low-pressure steam to the desired components such as the evaporator as described above. Turbines that provide medium pressure steam, i.e. steam with a pressure range of 1 to 5 barg and a temperature range of 100 to 250 °C, can be connected to a medium pressure steam conduit system that distributes the medium pressure steam to the desired components such as a dryer or heater. For instance, the medium pressure steam can be used to heat up solid granulates, particularly activated carbon or aluminium oxide. Thus, at least one steam outlet of at least one steam turbine can be connected with a conduit to a steam inlet of a vessel containing solid granulates, particularly activated carbon or aluminium oxide.

Steam exiting the at least steam turbine, such as a backpressure steam turbine, is used to supply heat to one or several distillation units, wherein the steam is provided at least to an evaporator that is present in the distillation unit. The steam exiting the steam turbine is used to supply heat to a distillation unit comprising the evaporator separating the solvent comprising water as an overhead product. Accordingly, the steam exiting the at least one steam turbine is used for supplying heat to a distillation unit for concentrating the extracted hydrogen peroxide.

The rotating equipment can be a compressor such as an air compressor, wherein the compressed air can be supplied to the oxidation reactor. After the compression, the oxygen containing gas such as air can pass an air separation unit which provides a gas stream enriched in nitrogen and a gas stream enriched in oxygen. The stream enriched in nitrogen can be collected or used in a process to prevent formation of flammable gas mixtures. The stream enriched in oxygen (enriched oxygen containing gas) is then supplied to the oxidation reactor. Accordingly, a steam turbine provides the desired pressurized steam to the evaporator in an AO process and the drive shaft of the steam turbine is able to provide power to a compressor that is used to compress air for the oxidation reactor (111) in an AO process. Thus, the energy consumption of the AO process can be significantly reduced.

The air compressor may be any type known to be suitable for compressing air from ambient pressure to a pressure of from 0.11 to 1.6 MPa. The air compressor may be a reciprocating compressor, a rotary screw compressor, a centrifugal compressor or an axial compressor and is preferably a centrifugal compressor. Preferably, a multistage compressor is used with coolers in between stages. The air compressor can be driven by the at least one steam turbine which is preferably directly connected to a drive shaft of the air compressor. An additional electric drive may also be connected to this drive shaft. The facility may contain one or more additional air compressors with outlets connected to the oxidation reactor for supplying compressed air and these additional air compressors may be driven electrically or by additional steam turbines or by a combination of both. The air is preferably compressed to a pressure of from 0.11 to 1.6 MPa, more preferably from 0.30 to 0.60 MPa. The compressed air is preferably cooled to a temperature in the range from 20 °C to 60 °C before introducing it into the oxidation reactor. Using an air compressor driven by a steam turbine for providing air to the oxidation step of the anthraquinone process significantly reduces the consumption of electric energy in the inventive process compared to a typical anthraquinone process using air compressed with an electrically driven air compressor.

The at least one steam turbine can drive any rotating equipment used in the AO process as described above. It is particularly desirable that the at least one steam turbine drives feed pumps in the AO process, such as a hydrogen feed pump, oxidizer feed pump, a feed pump for transferring the aqueous hydrogen peroxide extract to the distillation column, or a feed pump for the respective working solutions such as a working solution pump. Using a rotating equipment driven by a steam turbine of the anthraquinone process significantly reduces the consumption of electric energy.

The off-gas of the oxidation reactor can be used for at least one expansion turbine that also drives a rotating equipment. Typically, the oxidation reactor provides an oxidizer off-gas with a pressure range of 1 to 6 barg and a temperature range of 30 to 250 °C and the off-gas can drive at least one expansion turbine. Thus, an off-gas outlet of the oxidation reactor is connected with a conduit to an off-gas inlet of an expansion turbine.

It is particularly preferred that at least one rotating equipment is drivable by at least one expansion turbine and at least one steam turbine. Accordingly, the at least one steam turbine is subjected with high-pressure steam, i.e. a steam flow with a pressure range of 10 to 120 barg and a temperature range of 185 to 500 °C, derived from a superheated or saturated steam source and the expansion turbine is subjected with the off-gas of the oxidation reactor, wherein both turbines drive the same rotating equipment. Thus, both turbines are connected with a drive shaft to the at least one rotating equipment. Accordingly, a compressor can be driven by tat least one steam turbine via a drive shaft to save electrical energy and leads to less CO₂ emission.

The facility preferably comprises a pressure control valve for adjusting the pressure of the low and/or medium pressure steam obtained by the at least one steam turbine, preferably a control valve upstream of the heat exchanger receiving steam form the steam outlet of the backpressure steam turbine, the control valve being arranged in a steam conduit bypassing the steam turbine. The facility preferably also comprises a flow control valve upstream of the heat exchanger receiving steam form the steam outlet of the at least one steam turbine.

### FIGURES

The invention will now be described with reference to the accompanying figure which do not limit the scope and ambit of the invention. The description provided is purely by way of example and illustration. However, specific features exemplified in the figures can be used to further restrict the scope of the invention and claims.

FIG. 1 refers to a process and facility for making hydrogen peroxide (100). The system according to claim 1 comprises a unit for producing hydrogen peroxide (101), and a unit for producing dry steam (102).

A cyclic anthraquinone process (AO process) is used for the production of hydrogen peroxide in the unit for producing hydrogen peroxide (101). The AO process comprises a hydrogenator (110), an oxidation reactor (111), an extractor (112), and a distillation unit (103). The distillation unit (103) comprises an evaporator (113) and a distillation column (114).

The hydrogenator (110) comprises an inlet for supplying compressed hydrogen as well as an inlet for supplying working solution comprising alkylanthraquinone, an alkyltetrahydroanthraquinone or both. The working solution comprising alkylanthraquinone, an alkyltetrahydroanthraquinone or both, is then hydrogenated in order to obtain a hydrogenated working solution comprising an alkylanthrahydroquinone, an alkyltetrahydroanthrahydroquinone or both. The hydrogenator (110) further comprises an outlet for supplying the hydrogenated working solution comprising an alkylanthrahydroquinone, an alkyltetrahydroanthrahydroquinone or both, preferably by a working solution pump (117a-d), to the oxidation reactor (111), preferably via a buffer tank (118a-d). The hydrogenator (110) and the oxidation reactor (111) are preferably connected via a conduit.

Accordingly, the oxidation reactor (111) comprises an inlet for the hydrogenated working solution comprising an alkylanthrahydroquinone, an alkyltetrahydroanthrahydroquinone or both, as well as an inlet for compressed oxygen containing gas, such as compressed air, compressed enriched oxygen containing gas, or compressed enriched oxygen containing air. The hydrogenated working solution comprising an alkylanthrahydroquinone, an alkyltetrahydroanthrahydroquinone or both, is then oxidized in the oxidation reactor (111) using compressed oxygen containing gas to obtain an oxidized working solution comprising hydrogen peroxide and an alkylanthraquinone, an alkyltetrahydroanthraquinone or both. The oxidation reactor (111) further comprises an outlet for the oxidized working solution that is then supplied, preferably via a working solution pump (117d) and a buffer tank (118b) to an extractor (112) and an outlet for oxidizer off-gas. The oxidizer off-gas is the compressed oxygen containing gas after the oxidation of the hydrogenated working solution. The oxidizer off-gas is preferably compressed.

The extractor (112) comprises an inlet for receiving the oxidized working solution comprising hydrogen peroxide and an alkylanthraquinone, an alkyltetrahydroanthraquinone or both, as well as an inlet for receiving water (130). Accordingly, hydrogen peroxide from oxidized working solution is extracted (or separated) from the oxidized working solution to provide an aqueous hydrogen peroxide extract. Accordingly, a working solution comprising alkylanthraquinone, an alkyltetrahydroanthraquinone or both, is obtained that can be resupplied directly to the hydrogenator (110). It is also possible that the working solution comprising alkylanthraquinone, an alkyltetrahydroanthraquinone or both is supplied, preferably via a working solution pump (117c) using a buffer tank (118c), to a dryer (115) before supplying the working solution, preferably via a working solution pump (117d) using a buffer tank (118d), to the hydrogenator (110). Moreover, the extractor (112) comprises an outlet for supplying the aqueous hydrogen peroxide extract to a distillation unit (103), particularly a distillation column (114). The aqueous hydrogen peroxide extract usually comprises 20 to 60 wt.-%, such as 25 to 55 wt.-%, 20 to 40 wt.-%, or 30 to 50 wt.-%, of hydrogen peroxide, based on the total weight percentage of the aqueous hydrogen peroxide extract.

The dryer (115) can be supplied with a second steam flow with a pressure range of 1 to 5 barg, such as 1 to 4 barg, or 1 to 2 barg, and a temperature range of 100 to 250 °C, such as 100 to 220 °C, 110 to 200 °C (medium pressure steam).

The working solution pumps (117a, 117b, 117c and 117d), can be driven by at least one steam turbine (120, 121, 122, 123, 124). At least one working solution pump can be used to circulate the working solution via buffer tanks (118a, 118b, 118c, 118d) from the hydrogenator (110) to the oxidation reactor (111), from the oxidation reactor (111) to the extractor (112) and from the extractor (112) directly back to the hydrogenator (110) or preferably from the extractor (112) to the dryer (115) and from the dryer (115) back to the hydrogenator (110).

The distillation unit (103) in FIG. 1 comprises a distillation column (114) and an evaporator (113) arranged as a bottom evaporator. The aqueous hydrogen peroxide extract (feed) is transferred to the distillation column (114). Usually, the aqueous hydrogen peroxide extract is preheated before entering the distillation column (114). The preheating can be done by any means known in the art such as a heat exchanger, an evaporator, or a falling film evaporator as discussed above. The preheater can be heated by the steam flow with a pressure range of -0.8 barg to 3 barg and a temperature range of 60 to 185 °C produced by at least one steam turbine according to the invention. The vapor is condensed in a condenser (119) (top product). Non-condensable products can be discharged. Part of the top product is resupplied to the distillation column as a reflux and the remaining part of the top product or distillate can be collected (131) and resupplied to the extractor (112). The bottoms product is transferred to an evaporator (113) and a part of the bottom product is collected as concentrated aqueous hydrogen peroxide solution (132). The concentrated aqueous hydrogen peroxide solution (132) usually comprises 45 to 90 wt.-%, such as 50 to 80 wt.-%, 50 to 75 wt.-%, 65 to 70 wt.-%, or 60 to 75 wt.-%, of hydrogen peroxide, based on the total weight of the concentrated aqueous hydrogen peroxide solution.

The evaporator (113) comprises an inlet for receiving the concentrated aqueous hydrogen peroxide solution and an inlet for receiving a steam flow with a pressure range of -0.8 barg to 3 barg, preferably -0.8 to 2 barg, -0.7 to 1 barg, -0.6 to 1 barg, -0.5 to 0.5 barg, or -0.6 to 0 barg, and a temperature range of 60 to 185 °C preferably 60 to 185 °C, 60 to 185 °C, 80 to 170 °C, or 100 to 150 °C. The steam flow supplied to the evaporator refers also to the first steam flow and/or low-pressure flow. It is preferred that the pressure of the second steam flow providing steam is higher than the pressure of the first steam flow providing steam. It is desired that the steam flow is a dry steam flow or superheated or saturated steam flow. However, it is possible that the steam flow contains liquid portions. The evaporator (113) can be a falling film evaporator, single-stage evaporator, preferably a single-stage circulation evaporator, rising film evaporator, rising/falling film evaporator, or reboiler. A falling film evaporator is particularly preferred since the heat transfer efficiency allows the use of steam at below atmospheric pressure, such as -0.6 barg or -0.8 to 0 barg (low pressure such as vacuum pressure). The concentrated aqueous hydrogen peroxide solution is heated by the steam flow so that vapor is resupplied to the distillation column (114) and the remaining and not vaporized concentrated aqueous hydrogen peroxide solution is collected (132).

The unit for producing dry steam (102) comprises a steam generating unit (108). The steam generating unit (108) comprises a superheated or saturated steam source (116) such as steam generator preferably a gas turbine heat recovery steam generator, dry steam boiler or waste heat boiler, which is heated by product gas exiting the superheated or saturated steam source. The superheated or saturated steam source (116) is connected with a high-pressure conduit system (140).

Water (133) and/or condensate is transferred to a superheated or saturated steam source (116) for generating high-pressure steam. The generated high-pressure steam flow has a pressure in the range of 10 to 120 barg, preferably 20 to 50 barg, and a temperature in the range of 185 to 500 °C, preferably 200 to 400 °C.

The high-pressure conduit system (140) provides high-pressure steam to at least one steam turbine (120, 121, 122, 123), such as a backpressure steam turbine (120, 121, 122, 123). The at least one steam turbine (120, 121, 122, 123) is able to reduce the pressure and/or temperature of the high-pressure steam flow provided by the superheated or saturated steam source (116) to obtain the desired steam flow comprising steam. According to the invention, at least one steam turbine (120, 121, 122, 123) provides a steam flow with a pressure range of -0.8 barg to 3 barg and a temperature range of 60 to 185 °C (low pressure) that is transferred via a conduit to the evaporator (113). At least one steam turbine (120, 121, 122, 123) drives at least one rotating equipment, such as a compressor, a generator, a hydrogenator feed pump, an oxidizer feed pump, or further working solution pumps (125, 126, 127, 128, 117a-d). Particularly, the shaft-power of the turbines (120, 121, 122, 123) is used to drive the rotating equipment (125, 126, 127, 128, 117a-d). This allows to use energy, obtained from the turbines and the pressure difference of the high-pressure steam and the low-pressure steam, in order to drive the aforementioned rotating equipment. In the prior art, the rotating equipment of an AO process is driven by electric motors. Accordingly, the energy consumption and CO₂ emission of the process and facility according to the invention can be reduced. Moreover, it is possible to lower the decomposition of hydrogen peroxide by using low pressure providing by at least one steam turbine to the evaporator. Surprisingly we found that by using a falling film evaporator with a pressure of -0,8 barg to 0 barg and a temperature of 60 to 185 °C the decomposition of hydrogen peroxide can be reduced even more.

The at least one steam turbine (120, 121, 122, 123) can provide at least two steam flows including a first steam flow and a second steam flow. The first steam flow provides steam having low pressure, namely -0.8 to 3 barg and a temperature range of 60 to 185 °C that is transferred to the evaporator (113). The second steam flow provides steam having medium pressure, namely 1 to 5 barg and a temperature range of 100 to 250 °C that can be transferred to other AO process steam consumers such as a heater or dryer (115).

Different units for producing medium and/or low-pressure steam (104, 105, 106, 107) can be present. The number of units producing the required pressurized steam can be chosen as desired. The unit for producing medium pressure steam (104) comprises a steam turbine (120) that drives a first rotating equipment (125). The steam turbine (120) comprises an inlet for the high-pressure steam provided by the superheated or saturated steam source (116) and an outlet for the medium pressure steam. The medium pressure steam is distributed to a medium pressure steam conduit system (143) that supplies other AO process steam consumers, preferably the dryer (115), with medium pressure steam. The dryer (115) further comprises an outlet for the condensate derived from the supplied medium pressure steam. The condensate can be directly resupplied to the steam generating unit (108) or flashed in a chamber (150) to obtain low-pressure steam that can be supplied into the low-pressure steam conduit system (141). The remaining condensate can be resupplied to the steam generating unit (108).

However, medium pressure steam can also be supplied to further components such as a heater. The pressure in the medium pressure steam conduit system (143) can be balanced by a lower pressure source or throttled from high pressure. For instance, said conduit system (143) can comprise a throttling valve connected to the high-pressure steam conduit system (140).

The unit for producing low-pressure steam (106) comprises a steam turbine (122) that drives a compressor (127). The steam turbine (122) can also drive another rotating equipment. The steam turbine (122) comprises an inlet for the high-pressure steam provided by the superheated or saturated steam source (116) and an outlet for the low-pressure steam. The low-pressure steam is distributed to a low-pressure steam conduit system (141) that supplies the evaporator (113) with low-pressure steam. As mentioned above, low-pressure steam has a pressure in the range of -0.8 to 3 barg and a temperature range of 60 to 185 °C. If the required pressure for the evaporator is low, such as -0.8 to 0 barg (vacuum pressure), the steam turbine (122) will provide more energy to the compressor (127). A falling film evaporator, or a raising/falling film evaporator in an AO process is particularly preferred since the evaporator can be supplied with low-pressure steam, wherein the pressure is -0.8 to 0 barg. The compressor (127) is used to compress oxygen containing gas (144), such as air (144) or enriched oxygen containing air (144) and transfer the compressed gas to the oxidation reactor (111). The pressure in the low-pressure steam conduit system (141) can be balanced by a lower pressure source, or throttled from high pressure. For instance, said conduit system (143) can comprise a throttling valve connected to the high-pressure steam conduit system (140).

The unit for producing medium and low-pressure steam (105) comprises a steam turbine (121) that drives a hydrogen feed pump or compressor (126) or working solution pumps (117a, 117b, 117c, 117d). The steam turbine (121) can also drive another rotating equipment. The steam turbine (121) comprises an inlet for the high-pressure steam provided by the superheated or saturated steam source (116), an outlet for the low-pressure steam and an outlet for the medium pressure steam that are connected to the medium pressure steam conduit system (143) and the low-pressure steam conduit system (141), respectively. The hydrogen feed pump or compressor (126) is present within the hydrogen feed conduit (142) and transfers the hydrogen (134) to the hydrogenator (110). The working solution pumps (117a, 117b, 117c, 117d) are present in the unit for producing hydrogen peroxide (101) circulating the working solution from the hydrogenator (110) to the oxidation reactor (111), from the oxidation reactor (111) to the extractor (112), from the extractor (112) to the dryer (115) and from the dryer (115) back to the hydrogenator (110), preferably via buffer tanks (118a, 118b, 118c, 118d).

The unit for producing low pressure using oxidizer off-gas (107) comprises a steam turbine (123), an expansion turbine (124) and a rotating equipment (128), such as a compressor, a generator, a hydrogenator feed pump, an oxidizer feed pump, or further working solution pumps. The steam turbine (123) comprises an inlet for the high-pressure steam provided by the superheated or saturated steam source (116), and an outlet for the low-pressure steam connected to the low-pressure steam conduit system (141). The expansion turbine (124) comprises an off-gas inlet for oxidizer off-gas. A conduit connects the off-gas inlet of the expansion turbine (124) and the off-gas outlet of the oxidation reactor (111). Accordingly, the oxidation reactor can provide an oxidizer off-gas that can be transferred to the expansion turbine (124). The oxidizer off-gas with a pressure range of 1 to 6 barg and a temperature range of 30 to 250 °C can drive at least one expansion turbine (124). At least one expansion turbine (124) and at least one steam turbine (123) can drive at least one rotating equipment (128). Accordingly, the combination of an expansion turbine (124) using the off-gas of the oxidizer as well as a steam turbine further allows to operate additional pumps in the AO process so that energy input, e.g. electric input and CO₂ emission, can be further reduced.

### List of reference signs:

- 100: A process and facility for making hydrogen peroxide
- 101: Unit for producing hydrogen peroxide
- 102: Unit for producing dry steam
- 103: Distillation unit for concentrating aqueous hydrogen peroxide solution
- 104: Unit for producing medium pressure
- 105: Unit for producing medium and low pressure
- 106: Unit for producing low pressure
- 107: Unit for producing low pressure using oxidizer off-gas
- 108: Steam generating unit
- 110: Hydrogenator
- 111: Oxidation reactor
- 112: Extractor
- 113: Bottoms evaporator
- 114: Distillation unit
- 115: Dryer
- 116: Superheated or saturated steam source
- 117a-d: Working solution pump
- 118a-d: Buffer tank
- 119: Condenser
- 120: Steam turbine of unit 104
- 121: Steam turbine of unit 105
- 122: Steam turbine of unit 106
- 123: Steam turbine of unit 107
- 124: Expansion turbine
- 125: First rotating equipment
- 126: Hydrogen feed pump or compressor
- 127: Compressor
- 128: Second rotating equipment
- 130: Water inlet
- 131: Distillate to the superheated or saturated steam source (117)
- 132: Concentrated aqueous hydrogen peroxide solution
- 133: Water to the superheated or saturated steam source (117)
- 134: Hydrogen to Hydrogenator
- 140: High-pressure conduit system
- 141: Low-pressure steam conduit system
- 142: Hydrogen feed conduit
- 143: Medium pressure steam conduit system
- 144: Oxygen containing gas to the oxidation reactor (111)
- 150: Flash chamber

It will be appreciated that various modifications can be made, and that many changes can be made in the preferred embodiments without departing from the principle of the invention. The present invention is further described by the following aspects.

### Examples

### Comparative Example 1

In an AO anthraquinone process according to prior art without a steam turbine, steam with a pressure of 3 barg and a temperature of 144 °C from a steam source is provided to a boiler as an evaporator in the distillation column.

The total consumption of energy for producing steam from natural gas and for the shaft power by electrical motor is 77,95 MW. The consumption of electrical energy only for the shaft power for electrical motors is 19,35 MW. The overall CO₂ emission is 207,669 TCO₂/yr.

The overall yield of 70% by weight H₂O₂ solution is 98% by weight in the distillation unit.

### Example 2

In the AO anthraquinone process according to comparative example 1 a steam turbine is used to provide steam with pressure of 3 barg and a temperature of 144 °C to a boiler as an evaporator in the distillation unit.

The total consumption of energy for producing steam from natural gas and for the shaft power by electrical motor is 77,31 MW. The consumption of electrical energy only for the shaft power for electrical motors is 12,61 MW. The overall CO₂ emission is 177,874 TCO₂/yr.

Yield of 70% by weight H₂O₂ solution is 98% by weight in the distillation unit. The saving for the consumption of electrical energy for the shaft power for electrical motors is 34,89% and the overall CO₂ emission is reduced by 14,35%.

Surprisingly it was found that the total energy consumption, electricity consumption as well as the overall CO₂ emission could be reduced without negatively effecting the yield and concentration of the H₂O₂ solution.

### Example 3

In the AO anthraquinone process according to example 2 a steam turbine is used to provide steam with a pressure of -0,.6 barg and a temperature of 80°C to a falling film evaporator instead of a boiler in the distillation unit.

The total consumption of energy for producing steam from natural gas and for the shaft power by electrical motor is 77,01 MW. The consumption of electrical energy only for the shaft power for electrical motors is 8,91 MW. The overall CO₂ emission is 161,508 TCO₂/yr.

Due to the provision of the steam with a pressure of -0,6 barg and a temperature of 80°C provided by a steam turbine in an AO anthraquinone process, the decomposition of H₂O₂ could be reduced and therefore a yield higher than 98% of 70% by weight of H₂O₂ solution could be achieved.

Thus, the saving for the consumption of electrical energy for the shaft power for electrical motors is 53,95% and the overall CO₂ emission is reduced by 23%.

### Example 4

Additionally to example 3, the off-gas from the oxidation reactor is used by an expansion turbine which is connected to a steam turbine, providing steam with a pressure of -0,6 barg and a temperature of 80°C to a falling film evaporator. Both turbines are connected with a drive shafts to drive an air compressor.

The total consumption of energy for producing steam from natural gas and for the shaft power by electrical motor is 73,51 MW. The consumption of electrical energy only for the shaft power for electrical motors is 5,41 MW. The overall CO₂ emission is 140,928 TCO₂/yr.

Due to the provision of the steam with a pressure of -0,6 barg and a temperature of 80°C provided by a steam turbine in an AO anthraquinone process, the decomposition of H₂O₂ could be reduced and therefore a yield higher than 98% of 70% by weight of H₂O₂ solution could be achieved.

Thus, the saving for the consumption of electrical energy for the shaft power for electrical motors is 72,04% and the overall CO₂ emission is reduced by 32,14%.

## Claims

1. A process for making hydrogen peroxide, comprising the steps:
(a) hydrogenating a working solution, said working solution comprising an alkylanthraquinone, an alkyltetrahydroanthraquinone or both, contact said working solution with compressed hydrogen in a hydrogenator (110) to provide a hydrogenated working solution comprising an alkylanthrahydroquinone, an alkyltetrahydroanthrahydroquinone or both,
(b) oxidizing said hydrogenated working solution obtained in step a) with a compressed oxygen containing gas, such as compressed air or compressed enriched oxygen containing air, in an oxidation reactor (111) to provide an oxidized working solution comprising hydrogen peroxide and an alkylanthraquinone, an alkyltetrahydroanthraquinone or both,
(c) extracting hydrogen peroxide from oxidized working solution obtained in step b) to provide an aqueous hydrogen peroxide extract, and
(d) concentrating the aqueous hydrogen peroxide extract obtained in step c) in at least one distillation unit (103) comprising an evaporator (113) and a distillation column (114), said distillation column (114) receiving vapor from said evaporator (113), to provide a concentrated aqueous hydrogen peroxide solution,
**characterized in that** at least one steam turbine (120, 121, 122, 123) drives at least one rotating equipment (125, 126, 127, 128, 117a-d), at least one steam turbine (120, 121, 122, 123) providing a steam flow with a pressure range of -0.8 barg to 3 barg and a temperature range of 60 to 185 °C to the evaporator (113).

2. The process of claim 1, wherein the steam flow with a pressure range of -0.8 barg to 0 barg and a temperature range of 60 to 185 °C is used to supply heat to a falling film evaporator or a rising film evaporator and/or a falling/rising film evaporator.

3. The process of claim 1, wherein a steam flow with a pressure range of 10 to 120 barg and a temperature range of 185 to 500 °C drives at least one steam turbine (120, 121, 122, 123), preferably all steam turbines (120, 121, 122, 123),preferably a superheated or saturated steam source (116), preferably a steam generator provides a steam flow with a pressure range of 10 to 120 barg and a temperature range of 185 to 500 °C, said steam flow drives the at least one steam turbine (120, 121, 122, 123), preferably all steam turbines (120, 121, 122, 123).

4. The process of any one of the preceding claims, wherein at least one steam turbine (120, 121, 122, 123) providing at least two steam flows, a first steam flow provides steam with a pressure range of -0.8 to 3 barg and a temperature range of 60 to 185 °C to the evaporator and a second steam flow provides steam with a pressure range of 1 to 5 barg and a temperature range of 100 to 250 °C to a heater or dryer (115).

5. The process of claim 4, wherein the second steam flow provides steam to heat up solid granulates, particularly activated carbon or aluminium oxide.

6. The process of any one of the preceding claims, wherein the oxidation reactor (111) provides an oxidizer off-gas, wherein the oxidizer off-gas with a pressure range of 1 to 6 barg and a temperature range of 30 to 250 °C drives at least one expansion turbine (124), and/or wherein at least one expansion turbine (124) and at least one steam turbine (120, 121, 122, 123) drive at least one rotating equipment (125, 126, 127, 128, 117a-d).

7. A facility for producing hydrogen peroxide by an anthraquinone process comprising:
(a) a working fluid, preferably a circulating working fluid, comprising an alkylanthraquinone, an alkyltetrahydroanthraquinone or both,
(b) a hydrogenator (110) for hydrogenating the working solution, to provide a hydrogenated working solution,
(c) an oxidizer for oxidizing the hydrogenated working solution with an oxygen containing gas, said oxidizer comprising an oxidation reactor (111) and a gas compressor (127) for introducing compressed said oxygen containing gas into the oxidation reactor (111), to provide an oxidized working solution,
(d) an extractor (112) for extracting hydrogen peroxide from the oxidized working solution to provide an aqueous hydrogen peroxide extract, and
(e) a distillation unit (103) for concentrating the aqueous hydrogen peroxide extract to provide a concentrated hydrogen peroxide solution, said distillation unit (103) comprising a distillation column (114) and an evaporator (113),
**characterized in that** the facility comprises at least one steam turbine (120, 121, 122, 123), wherein the steam turbine (120, 121, 122, 123) is subjectable with steam, at least one rotating equipment (125, 126, 127, 128, 117a-d) is drivable by at least one steam turbine (120, 121, 122, 123), a steam outlet of the steam turbine (120, 121, 122, 123) is connected with a conduit (141) to a steam inlet of the evaporator (113).

8. The facility according to claim 7, wherein a steam inlet of at least one steam turbine (120, 121, 122, 123) is connected with a conduit (140) from a steam outlet of a superheated or saturated steam source (116).

9. The facility according to any one of claim 7 or 8, wherein an electric generator is drivable by the superheated or saturated steam source (116).

10. The facility according to any one of claims 7 to 9, wherein at least one steam turbine (121) has one steam inlet and two steam outlets.

11. The facility according to claim 10, wherein at least one steam outlet of at least one steam turbine (120, 121, 122, 123) is connected with a conduit (141, 143) to a steam inlet of a heater or dryer (115).

12. The facility according to claims 10 or 11, wherein at least one steam outlet of at least one steam turbine (120, 121, 122, 123) is connected with a conduit to a steam inlet of a vessel containing solid granulates, particularly activated carbon or aluminium oxide.

13. The facility according to any one of claims 7 to 12, wherein an off-gas outlet of the oxidation reactor (111) is connected with a conduit to an off-gas inlet of an expansion turbine (124), at least one rotating equipment (125, 126, 127, 128, 117a-d) is drivable by at least one expansion turbine (124) and at least one steam turbine (123).

14. The facility according to any one of claims 9 to 13, wherein the evaporator (113) is a falling film evaporator (113), or a rising film evaporator (113), and/or a film rising/falling evaporator (113), preferably a falling film evaporator (113).

15. Use of at least one steam turbine (120, 121, 122, 123) that drives at least one rotating equipment (125, 126, 127, 128, 117a-d) in a process for producing hydrogen peroxide by an anthraquinone process, wherein the at least one steam turbine provides a steam flow with a pressure range of -0.8 barg to 3 barg and a temperature range of 60 to 185 °C to an evaporator (113) for concentrating an aqueous hydrogen peroxide extract in at least one distillation unit (103) comprising the evaporator (113) to obtain concentrated aqueous hydrogen peroxide solution.

## Patentansprüche

1. Verfahren zur Herstellung von Wasserstoffperoxid, umfassend die Schritte:
(a) Hydrieren einer Arbeitslösung, wobei die Arbeitslösung ein Alkylanthrachinon, ein Alkyltetrahydroanthrachinon oder beides umfasst, Inkontaktbringen der Arbeitslösung mit komprimiertem Wasserstoff in einem Hydrierungsreaktor (110), um eine hydrierte Arbeitslösung bereitzustellen, die ein Alkylanthrahydrochinon, ein Alkyltetrahydroanthrahydrochinon oder beides umfasst,
(b) Oxidieren der bei Schritt a) erhaltenen hydrierten Arbeitslösung mit einem komprimierten sauerstoffhaltigen Gas, wie z.B. komprimierter Luft oder komprimierter sauerstoffangereicherter Luft, in einem Oxidationsreaktor (111), um eine oxidierte Arbeitslösung bereitzustellen, die Wasserstoffperoxid und ein Alkylanthrachinon, ein Alkyltetrahydroanthrachinon oder beides umfasst,
(c) Extrahieren von Wasserstoffperoxid aus bei Schritt b) erhaltener oxidierter Arbeitslösung, um einen wässrigen Wasserstoffperoxidextrakt bereitzustellen, und
(d) Konzentrieren des in Schritt c) erhaltenen wässrigen Wasserstoffperoxidextrakts in wenigstens einer Destillationseinheit (103), die einen Verdampfer (113) und eine Destillationskolonne (114) umfasst, wobei die Destillationskolonne (114) Dampf aus dem Verdampfer (113) erhält, um eine konzentrierte wässrige Wasserstoffperoxidlösung bereitzustellen,
**dadurch gekennzeichnet, dass** wenigstens eine Dampfturbine (120, 121, 122, 123) wenigstens eine rotierende Vorrichtung (125, 126, 127, 128, 117a-d) antreibt, wenigstens eine Dampfturbine (120, 121, 122, 123) einen Dampfstrom mit einem Druckbereich von -0,8 barg bis 3 barg und einem Temperaturbereich von 60 bis 185 °C an den Verdampfer (113) bereitstellt.

2. Verfahren nach Anspruch 1, wobei der Dampfstrom mit einem Druckbereich von -0,8 barg bis 0 barg und einem Temperaturbereich von 60 bis 185 °C verwendet wird, um Wärme an einen Fallfilmverdampfer oder einen Steigfilmverdampfer und/oder einen Fall-/Steigfilmverdampfer zu liefern.

3. Verfahren nach Anspruch 1, wobei ein Dampfstrom mit einem Druckbereich von 10 bis 120 barg und einem Temperaturbereich von 185 bis 500 °C wenigstens eine Dampfturbine (120, 121, 122, 123) antreibt, vorzugsweise alle Dampfturbinen (120, 121, 122, 123), vorzugsweise eine überhitzte oder gesättigte Dampfquelle (116), vorzugsweise ein Dampferzeuger einen Dampfstrom mit einem Druckbereich von 10 bis 120 barg und einem Temperaturbereich von 185 bis 500 °C bereitstellt, wobei der Dampfstrom wenigstens eine Dampfturbine (120, 121, 122, 123), vorzugsweise alle Dampfturbinen (120, 121, 122, 123), antreibt.

4. Verfahren nach einem der vorhergehenden Ansprüche, wobei wenigstens eine Dampfturbine (120, 121, 122, 123) wenigstens zwei Dampfströme bereitstellt, wobei ein erster Dampfstrom Dampf mit einem Druckbereich von -0,8 bis 3 barg und einem Temperaturbereich von 60 bis 185 °C an den Verdampfer bereitstellt und ein zweiter Dampfstrom Dampf mit einem Druckbereich von 1 bis 5 barg und einem Temperaturbereich von 100 bis 250 °C an einen Heizer oder Trockner (115) bereitstellt.

5. Verfahren nach Anspruch 4, wobei der zweite Dampfstrom Dampf zum Erhitzen fester Granulate, insbesondere Aktivkohle oder Aluminiumoxid, bereitstellt.

6. Verfahren nach einem der vorhergehenden Ansprüche, wobei der Oxidationsreaktor (111) ein Oxidationsabgas bereitstellt, wobei das Oxidationsabgas mit einem Druckbereich von 1 bis 6 barg und einem Temperaturbereich von 30 bis 250 °C wenigstens eine Expansionsturbine (124) antreibt, und/oder wobei wenigstens eine Expansionsturbine (124) und wenigstens eine Dampfturbine (120, 121, 122, 123) wenigstens eine rotierende Vorrichtung (125, 126, 127, 128, 117a-d) antreiben.

7. Anlage zur Herstellung von Wasserstoffperoxid durch ein Anthrachinonverfahren, umfassend:
(a) ein Arbeitsfluid, vorzugsweise ein zirkulierendes Arbeitsfluid, umfassend ein Alkylanthrachinon, ein Alkyltetrahydroanthrachinon oder beides,
(b) einen Hydrierungsreaktor (110) zum Hydrieren der Arbeitslösung, um eine hydrierte Arbeitslösung bereitzustellen,
(c) eine Oxidationsvorrichtung zum Oxidieren der hydrierten Arbeitslösung mit einem sauerstoffhaltigen Gas, wobei die Oxidationsvorrichtung einen Oxidationsreaktor (111) und einen Gaskompressor (127) zum Einführen des komprimierten sauerstoffhaltigen Gases in den Oxidationsreaktor (111) umfasst, um eine oxidierte Arbeitslösung bereitzustellen,
(d) eine Extraktionsvorrichtung (112) zum Extrahieren von Wasserstoffperoxid aus der oxidierten Arbeitslösung, um einen wässrigen Wasserstoffperoxidextrakt bereitzustellen, und
(e) eine Destillationseinheit (103) zum Konzentrieren des wässrigen Wasserstoffperoxidextrakts, um eine konzentrierte Wasserstoffperoxidlösung bereitzustellen, wobei die Destillationseinheit (103) eine Destillationskolonne (114) und einen Verdampfer (113) umfasst,
**dadurch gekennzeichnet, dass** die Anlage wenigstens eine Dampfturbine (120, 121, 122, 123) umfasst, wobei die Dampfturbine (120, 121, 122, 123) mit Dampf beaufschlagbar ist, wenigstens eine rotierende Vorrichtung (125, 126, 127, 128, 117a-d) durch wenigstens eine Dampfturbine (120, 121, 122, 123) antreibbar ist, ein Dampfauslass der Dampfturbine (120, 121, 122, 123) mit einer Leitung (141) zu einem Dampfeinlass des Verdampfers (113) verbunden ist.

8. Anlage nach Anspruch 7, wobei ein Dampfeinlass wenigstens einer Dampfturbine (120, 121, 122, 123) mit einer Leitung (140) von einem Dampfauslass einer überhitzten oder gesättigten Dampfquelle (116) verbunden ist.

9. Anlage nach einem der Ansprüche 7 oder 8, wobei ein Elektrogenerator durch die überhitzte oder gesättigte Dampfquelle (116) antreibbar ist.

10. Anlage nach einem der Ansprüche 7 bis 9, wobei wenigstens eine Dampfturbine (121) einen Dampfeinlass und zwei Dampfauslässe aufweist.

11. Anlage nach Anspruch 10, wobei wenigstens ein Dampfauslass wenigstens einer Dampfturbine (120, 121, 122, 123) mit einer Leitung (141, 143) zu einem Dampfeinlass eines Heizers oder Trockners (115) verbunden ist.

12. Anlage nach Anspruch 10 oder 11, wobei wenigstens ein Dampfauslass wenigstens einer Dampfturbine (120, 121, 122, 123) mit einer Leitung zu einem Dampfeinlass eines Behälters, der festes Granulat, insbesondere Aktivkohle oder Aluminiumoxid, enthält, verbunden ist.

13. Anlage nach einem der Ansprüche 7 bis 12, wobei ein Abgasauslass des Oxidationsreaktors (111) mit einer Leitung zu einem Abgaseinlass einer Expansionsturbine (124) verbunden ist, wobei wenigstens eine rotierende Vorrichtung (125, 126, 127, 128, 117a-d) durch wenigstens eine Expansionsturbine (124) und wenigstens eine Dampfturbine (123) antreibbar ist.

14. Anlage nach einem der Ansprüche 9 bis 13, wobei der Verdampfer (113) ein Fallfilmverdampfer (113) oder ein Steigfilmverdampfer (113) und/oder ein Steig-/Fallfilmverdampfer (113), vorzugsweise ein Fallfilmverdampfer (113), ist.

15. Verwendung wenigstens einer Dampfturbine (120, 121, 122, 123), die wenigstens eine rotierende Vorrichtung (125, 126, 127, 128, 117a-d) antreibt, bei einem Verfahren zur Herstellung von Wasserstoffperoxid durch ein Anthrachinonverfahren, wobei die wenigstens eine Dampfturbine einen Dampfstrom mit einem Druckbereich von -0,8 barg bis 3 barg und einem Temperaturbereich von 60 bis 185 °C an einen Verdampfer (113) zum Konzentrieren eines wässrigen Wasserstoffperoxidextrakts in wenigstens einer Destillationseinheit (103), die den Verdampfer (113) umfasst, bereitstellt, um konzentrierte wässrige Wasserstoffperoxidlösung zu erhalten.

## Revendications

1. Procédé de fabrication de peroxyde d'hydrogène, comprenant les étapes :
(a) hydrogénation d'une solution de travail, ladite solution de travail comprenant une alkylanthraquinone, une alkyltétrahydroanthraquinone ou les deux, la mise en contact de ladite solution de travail avec de l'hydrogène comprimé dans un hydrogénateur (110) pour fournir une solution de travail hydrogénée comprenant une alkylanthrahydroquinone, une alkyltétrahydroanthrahydroquinone ou les deux,
(b) oxydation de ladite solution de travail hydrogénée obtenue à l'étape a) avec un gaz contenant de l'oxygène comprimé, tel que de l'air comprimé ou de l'oxygène enrichi comprimé contenant de l'air, dans un réacteur d'oxydation (111) pour fournir une solution de travail oxydée comprenant du peroxyde d'hydrogène et une alkylanthraquinone, une alkyltétrahydroanthraquinone ou les deux,
(c) extraction de peroxyde d'hydrogène d'une solution de travail oxydée obtenue à l'étape b) pour fournir un extrait aqueux de peroxyde d'hydrogène, et
(d) concentration de l'extrait aqueux de peroxyde d'hydrogène obtenu à l'étape c) dans au moins une unité de distillation (103) comprenant un évaporateur (113) et une colonne de distillation (114), ladite colonne de distillation (114) recevant de la vapeur dudit évaporateur (113), pour fournir une solution aqueuse concentrée de peroxyde d'hydrogène,
**caractérisé en ce qu'**au moins une turbine à vapeur (120, 121, 122, 123) entraîne au moins un équipement rotatif (125, 126, 127, 128, 117a-d), au moins une turbine à vapeur (120, 121, 122, 123) fournissant un écoulement de vapeur avec une plage de pression de -0,8 barg à 3 barg et une plage de température de 60 à 185 °C à l'évaporateur (113).

2. Procédé selon la revendication 1, dans lequel l'écoulement de vapeur avec une plage de pression de - 0,8 barg à 0 barg et une plage de température de 60 à 185 °C est utilisé pour alimenter en chaleur un évaporateur à film tombant ou un évaporateur à film montant et/ou un évaporateur à film tombant/montant.

3. Procédé selon la revendication 1, dans lequel un écoulement de vapeur avec une plage de pression de 10 à 120 barg et une plage de température de 185 à 500 °C entraîne au moins une turbine à vapeur (120, 121, 122, 123), préférablement toutes les turbines à vapeur (120, 121, 122, 123), préférablement une source de vapeur surchauffée ou saturée (116), préférablement un générateur de vapeur fournit un écoulement de vapeur avec une plage de pression de 10 à 120 barg et une plage de température de 185 à 500 °C, ledit écoulement de vapeur entraîne l'au moins une turbine à vapeur (120, 121, 122, 123), préférablement toutes les turbines à vapeur (120, 121, 122, 123).

4. Procédé selon l'une quelconque des revendications précédentes, dans lequel au moins une turbine à vapeur (120, 121, 122, 123) fournissant au moins deux écoulements de vapeur, un premier écoulement de vapeur fournit de la vapeur avec une plage de pression de -0,8 à 3 barg et une plage de température de 60 à 185 °C à l'évaporateur et un deuxième écoulement de vapeur fournit de la vapeur avec une plage de pression de 1 à 5 barg et une plage de température de 100 à 250 °C à un dispositif de chauffage ou de séchage (115).

5. Procédé selon la revendication 4, dans lequel le deuxième écoulement de vapeur fournit de la vapeur pour chauffer des granulés solides, en particulier du charbon actif ou de l'oxyde d'aluminium.

6. Procédé selon l'une quelconque des revendications précédentes, dans lequel le réacteur d'oxydation (111) fournit un gaz de dégagement d'oxydant, le gaz de dégagement d'oxydant avec une plage de pression de 1 à 6 barg et une plage de température de 30 à 250 °C entraînant au moins une turbine de détente (124), et/ou au moins une turbine de détente (124) et au moins une turbine à vapeur (120, 121, 122, 123) entraînant au moins un équipement rotatif (125, 126, 127, 128, 117a-d).

7. Installation pour produire du peroxyde d'hydrogène par un procédé d'anthraquinone comprenant :
(a) un fluide de travail, préférablement un fluide de travail en circulation, comprenant une alkylanthraquinone, une alkyltétrahydroanthraquinone ou les deux,
(b) un hydrogénateur (110) pour hydrogéner la solution de travail, afin de fournir une solution de travail hydrogénée,
(c) un oxydant pour oxyder la solution de travail hydrogénée avec un gaz contenant de l'oxygène, ledit oxydant comprenant un réacteur d'oxydation (111) et un compresseur de gaz (127) pour introduire ledit gaz contenant de l'oxygène comprimé dans le réacteur d'oxydation (111), afin de fournir une solution de travail oxydée,
(d) un extracteur (112) pour extraire le peroxyde d'hydrogène de la solution de travail oxydée afin de fournir un extrait aqueux de peroxyde d'hydrogène, et
(e) une unité de distillation (103) pour concentrer l'extrait aqueux de peroxyde d'hydrogène afin de fournir une solution concentrée de peroxyde d'hydrogène, ladite unité de distillation (103) comprenant une colonne de distillation (114) et un évaporateur (113),
**caractérisée en ce que** l'installation comprend au moins une turbine à vapeur (120, 121, 122, 123), la turbine à vapeur (120, 121, 122, 123) pouvant être soumise à de la vapeur, au moins un équipement rotatif (125, 126, 127, 128, 117a-d) pouvant être entraîné par au moins une turbine à vapeur (120, 121, 122, 123), une sortie de vapeur de la turbine à vapeur (120, 121, 122, 123) étant raccordée avec un conduit (141) à une entrée de vapeur de l'évaporateur (113).

8. Installation selon la revendication 7, dans laquelle une entrée de vapeur d'au moins une turbine à vapeur (120, 121, 122, 123) est raccordée avec un conduit (140) à partir d'une sortie de vapeur d'une source de vapeur surchauffée ou saturée (116).

9. Installation selon l'une quelconque des revendications 7 ou 8, dans laquelle un générateur électrique peut être entraîné par la source de vapeur surchauffée ou saturée (116).

10. Installation selon l'une quelconque des revendications 7 à 9, dans laquelle au moins une turbine à vapeur (121) a une entrée de vapeur et deux sorties de vapeur.

11. Installation selon la revendication 10, dans laquelle au moins une sortie de vapeur d'au moins une turbine à vapeur (120, 121, 122, 123) est raccordée avec un conduit (141, 143) à une entrée de vapeur d'un dispositif de chauffage ou de séchage (115).

12. Installation selon la revendication 10 ou la revendication 11, dans laquelle au moins une sortie de vapeur d'au moins une turbine à vapeur (120, 121, 122, 123) est raccordée avec un conduit à une entrée de vapeur d'un récipient contenant des granulats solides, en particulier du charbon actif ou de l'oxyde d'aluminium.

13. Installation selon l'une quelconque des revendications 7 à 12, dans laquelle une sortie de gaz de dégagement du réacteur d'oxydation (111) est raccordée avec un conduit à une entrée de gaz de dégagement d'une turbine de détente (124), au moins un équipement rotatif (125, 126, 127, 128, 117a-d) peut être entraîné par au moins une turbine de détente (124) et au moins une turbine à vapeur (123).

14. Installation selon l'une quelconque des revendications 9 à 13, dans laquelle l'évaporateur (113) est un évaporateur à film tombant (113), ou un évaporateur à film montant (113), et/ou un évaporateur montant/tombant de film (113), préférablement un évaporateur à film tombant (113).

15. Utilisation d'au moins une turbine à vapeur (120, 121, 122, 123) qui entraîne au moins un équipement rotatif (125, 126, 127, 128, 117a-d) dans un procédé pour produire du peroxyde d'hydrogène par un procédé d'anthraquinone, l'au moins une turbine à vapeur fournissant un écoulement de vapeur avec une plage de pression de -0,8 barg à 3 barg et une plage de température de 60 à 185 °C à un évaporateur (113) pour concentrer un extrait aqueux de peroxyde d'hydrogène dans au moins une unité de distillation (103) comprenant l'évaporateur (113) afin d'obtenir une solution aqueuse concentrée de peroxyde d'hydrogène.
